# EUROPEAN PATENT SPECIFICATION

(11) **EP 3 726 107 B1**
(45) Date of publication and mention of the grant of the patent: **31.08.2022**
(21) Application number: 20165814.3
(22) Date of filing: 26.03.2020
(51) Int. Cl.: F16K 5/06, F16K 31/60, F16K 35/06, F16B 23/00, F16B 41/00, G05G 5/28

(54) **VALVE FOR FLUIDS WITH ANTI-FRAUD LOCKING DEVICE WHICH CAN BE OPERATED WITH A SPECIAL DEDICATED TOOL**
VENTIL FÜR FLÜSSIGKEITEN MIT EINER ANTI-BETRUGSVERRIEGELUNGSVORRICHTUNG, DIE MIT EINEM SPEZIELLEN DEDIZIERTEN WERKZEUG BETÄTIGT WERDEN KANN
SOUPAPE POUR FLUIDES AVEC DISPOSITIF DE VERROUILLAGE ANTI-FRAUDE POUVANT FONCTIONNER AVEC UN OUTIL DÉDIÉ SPÉCIAL

(30) Priority: 17.04.2019 IT 201900005982
(43) Date of publication of application: 21.10.2020
(73) Proprietor: Bluetag S.r.l., 13018 Valduggia (Vercelli) (IT)
(72) Inventor: COSCARELLI, Paolo, 13019 Varallo (Vercelli) (IT)
(74) Representative: Mazzitelli, Maria

(56) References cited:
- EP-A2- 2 378 170
- FR-A1- 2 590 335
- GB-A- 2 146 412
- US-B1- 6 276 662

## Description

The present invention relates to a valve for the distribution of fluids, both liquid and gaseous, provided with locking means that allow the member for manoeuvring of the shutter of the valve to be set in different setting positions.

Merely by way of example, the valves of the aforementioned type can be mounted on distribution meters for drinking water, and must be able to be set, for example by the water distribution body, according to different ways of use by the user.

Such a valve comprises a shutter, normally of the ball type, which can be actuated between a position of opening and a position of closure by means of a special manoeuvring member, normally of the butterfly type.

In particular, three types of valve settings or tuning are possible:
setting 1: open/closed - condition of normal use with free manoeuvre of opening and closing of the valve, and possibility of placing the shutter in any intermediate position between the two;
setting 2: totally closed - condition of total locking in which the valve cannot be operated;
setting 3: partially closed - partial locking condition in which the valve is partially open, e.g. 10%. The valve is partially operable, from the totally closed to the partially closed condition.

In order to arrange the butterfly manoeuvring member of the valve in the positions that allow the settings described above to be obtained, avoiding possible tampering by the user or by some malicious person, the butterfly manoeuvring member is attached to the shutter in the chosen position with respect to the valve body by means of a screw that must be unscrewed to modify the valve setting.

For this purpose, a screw with a shaped head is used so as to be engaged by the tip of a tool shaped in a complementary manner.

Such a valve is described, for example, in US 6276662B1 and provides a screw with a head, at the top of which there is a cavity with radial grooves and a protrusion that rises from the base to the centre of the cavity so that the screw can be actuated by a tool whose tip has such a shape as to couple not only with the radial grooves but also with the protrusion in the centre of the cavity.

FR 2590335A1 describes an anti-theft system for wheels of vehicles in which at least one nut or screw is shaped so as to be inviolable by a common tool.

A solution with a suitably shaped screw and tool as described previously has not proved to be totally satisfactory or reliable.

In fact, in order to be able to tighten the screw firmly, in addition to rotating the tool, a certain axial thrust must also be exerted on the screw head, and the same is required during unscrewing.

Another disadvantage of this known solution comes from the fact that among the many tools normally available to a user it is possible to find a tip that in some way adapts to the screw head, allowing the unscrewing thereof and therefore the tampering with the valve.

The object of the invention is to eliminate the disadvantages of the prior art illustrated above.

More particularly, one object of the invention is to provide a valve with anti-fraud locking device that allows easy and safe manoeuvre of the attachment screw by means of a special dedicated tool.

Another object of the invention is to provide such a valve in which it is practically impossible, or at least extremely unlikely, to actuate the screw for attachment of the manoeuvring member to the shutter by means of a commercially available tool.

Yet another object of the invention is to provide such a valve in which the attachment screw can be actuated with the relative tool in a simple and highly reliable manner. These and other objects are achieved by the assembly according to the invention which has the features of the appended independent claim 1.

Advantageous embodiments of the invention are disclosed in the dependent claims. Substantially, the assembly according to the invention comprises a valve for fluids and a dedicated tool, said valve comprising a body housing a rotatable shutter, and a control rod for said shutter protruding from the body and which can be actuated by means of a manoeuvring member which can be attached to said rod in several different angular positions by means of an attachment screw, said screw being shaped in such a way that it can be screwed/unscrewed with said dedicated tool in order to prevent tampering of the valve,
said tool comprising a hollow stem, a pin, a spring and a pair of balls, and said screw having a threaded shank which is screwed into a threaded hole at the top of said rod and a tubular section above, in which two diametrically opposed holes are provided, designed to partially house the pair of balls during the coupling of the tool to the screw, the balls being housed in slightly conical opposing holes of the hollow stem of the tool in which a pin is inserted, the pin having a terminal section constantly engaged with said balls under the action of the spring acting between an inner shoulder of the hollow stem and a collar of the pin,
adjacent to said end section, the pin having a narrowing of diameter determining an annular cavity, designed to partially house said balls without them protruding from the external profile of said hollow stem.

Further features of the invention will be made clearer by the detailed description that follows, referred to one of its embodiments purely by way of a non-limiting example, illustrated in the accompanying drawings, in which:
Figure 1 is a blown-up axonometric view of the assembly according to the invention complete with accessories;
Figure 2 is an axonometric view of the valve in Figure 1 in the assembled condition with closing cap mounted and screw driving tool shown separately;

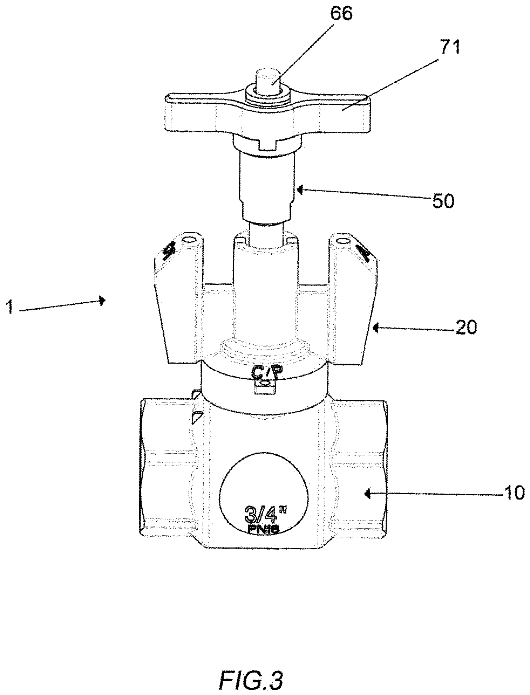

Figure 3 is an axonometric view of the valve of Figure 1 in assembled condition and with the screw driving tool in working condition;
Figures 4a and 4b are plan views from above of the valve, respectively open and closed, in the setting condition 1, as described above, wherein it can be manoeuvred by the user;
Figure 5 is a plan view from above of the closed valve, in the setting condition 2 wherein it is not manoeuvrable;
Figures 6a and 6b are plan views from above of the valve, respectively partially open and totally closed, in setting condition 3 wherein it is partially manoeuvrable;
Figures 7 and 8 are axonometric views of the valve body with the shutter in the opening and closure position respectively;
Figure 9 is a partial section view of the valve as shown in Figure 3, with the tool in the condition of engagement with the tightening screw of the manoeuvring member of the shutter;
Figures 10 and 11 are slightly enlarged axonometric views of the tightening screw and of the end of the tool engaged with the screw, respectively;
Figures 12a to 12d are section views showing successive steps for the engagement of the tool with the tightening screw.
Figure 13 is an axonometric view of a variant embodiment of the screw driving tool;
Figures 13a and 13b are section views of the tool of Figure 13 taken at 90° one in relation to the other.

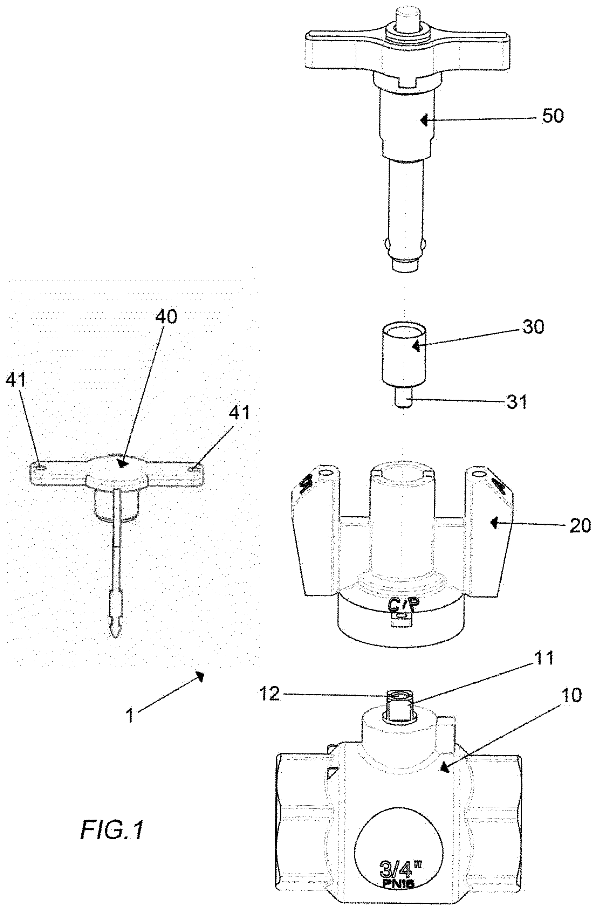

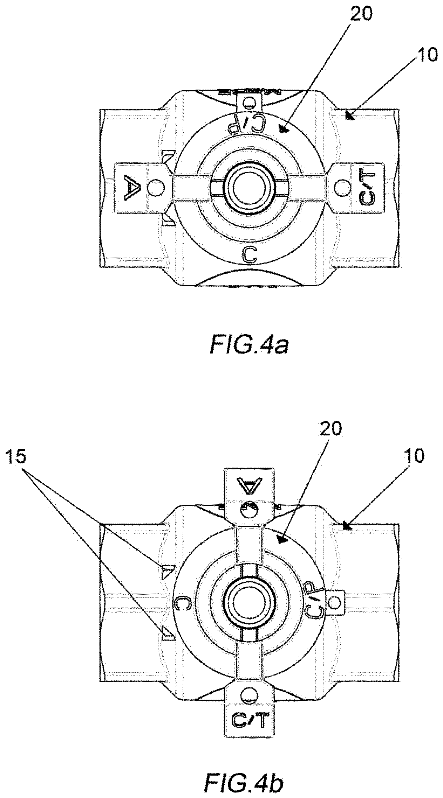

Referring to these drawings, the assembly with a valve with anti-fraud locking device according to the invention has been denoted as a whole by reference numeral 1, and substantially comprises a valve body 10 inside whereof is placed a shutter, normally of the ball type, of which the end of an actuation rod 11 can be seen in Figure 1 protruding above the body 10, by means of which it can be rotated through 90° to pass from the open position of Figure 4a to the closed position of Figure 4b, which will be described in greater detail here below.

On the rod 11 of the valve shutter a butterfly manoeuvring member 20 can be keyed, in a manner in itself known, in several different angular positions, attached axially to the rod by means of an attachment screw 30 that is screwed in a threaded hole 12 provided at the top of the rod.

The actuation of the screw 30 for the assembly and disassembly of the butterfly manoeuvring member 20 takes place by means of a special dedicated tool 50, as will be described in greater detail here below.

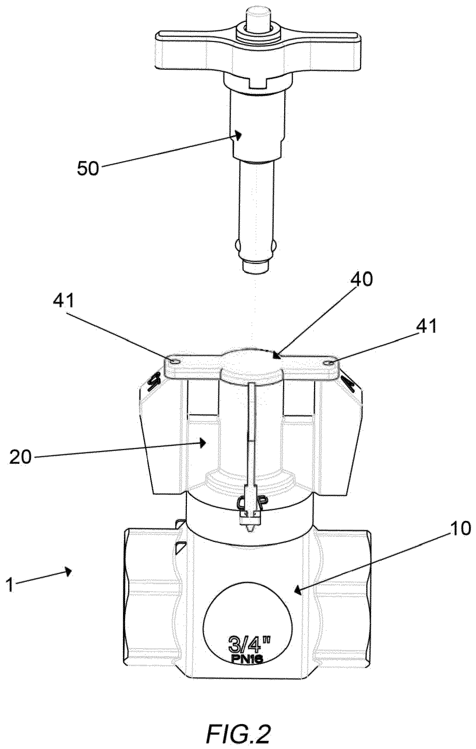

As shown in Figure 2, a pressure cap 40 provided with holes 41 for the insertion of a tamper-proof guarantee seal can be mounted on the assembled valve.

Referring to Figures 4 to 6, the three possibilities of setting of the valve are now illustrated in brief.

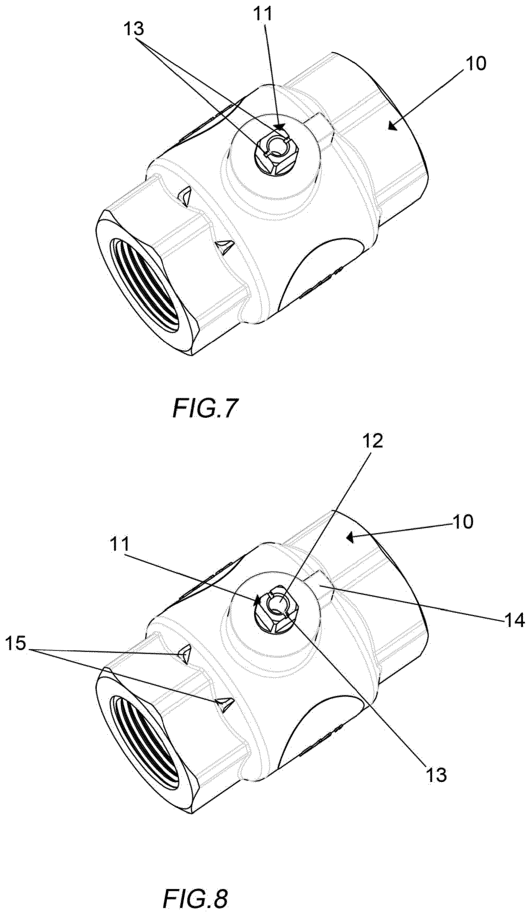

Figures 7 and 8 show two reference notches 13 on rod 11, which when oriented parallel to the direction of flow (Figure 7) indicate that the valve is open, and when oriented perpendicularly to the direction of flow (Figure 8) indicate that the valve is closed.

On the valve body 10 a reference 14 is provided, and other references are provided inside the manoeuvring member 20, in such a way that, depending on how the manoeuvring member 20 is positioned on valve body 10, rod 11 can be freely manoeuvred, or remain locked in a pre-established position.

In order to facilitate the positioning of the manoeuvring member 20 in the different setting conditions, writings are provided on the same to be placed at appropriate reference marks 15 provided on the valve body 10.

In particular, the symbols A for open valve, C for closed valve, C/T for totally closed valve and C/P for partially closed valve are marked at 90° one from the other on the manoeuvring member 20.

Figures 4a and 4b show the setting 1 of the valve, wherein the shutter can be freely rotated between the open valve position of Figure 4a and the closed valve position of Figure 4b, with the possibility of placing it in any intermediate position between the two, so that the flow can be regulated.

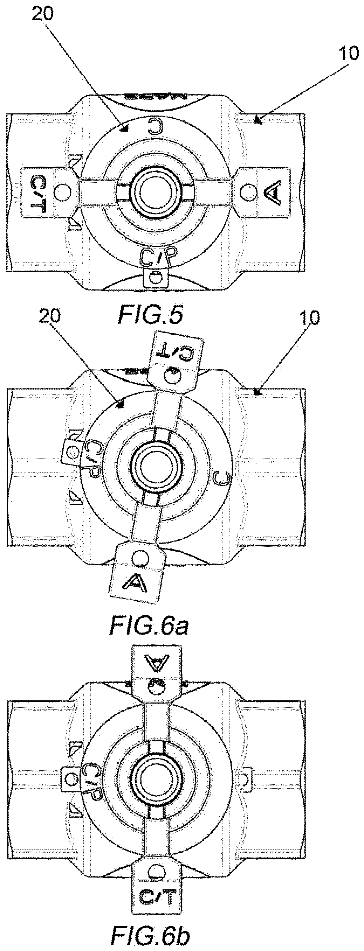

Figure 5 illustrates the setting condition 2, in which the shutter remains locked in the totally closed position without the possibility of manoeuvring the valve.

Figures 6a and 6b, finally, show the setting condition 3, in which the shutter remains partially locked between the partially closed position and the totally closed position, respectively, limiting the possibility of manoeuvre, allowing for example 10% of the flow to pass.

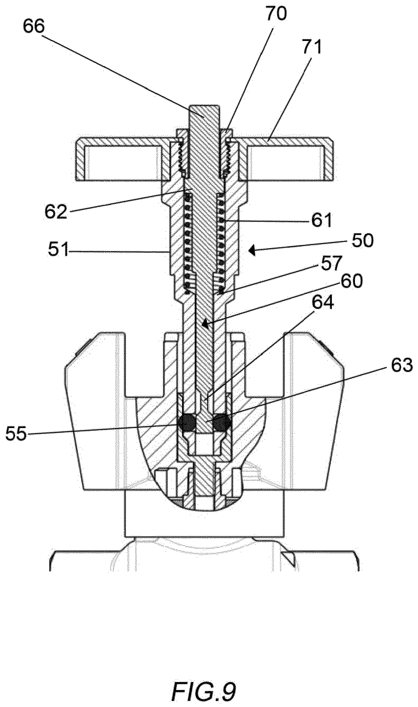

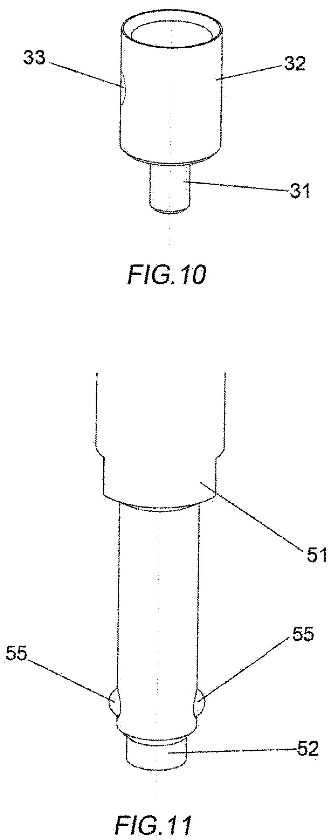

Referring now to Figures 9 to 12, tool 50 for actuating the tightening screw 30 and its relative functioning is described.

The tightening screw 30 is a cup screw, with a threaded shank 31 that is screwed into hole 12 of rod 11, and a tubular section 32 for the engaging of the tool end 50, provided with two holes 33 in diametrically opposed positions.

The aforementioned tubular section 32 above the threaded shank 31 has internally a flair or a conical section 34 at a level immediately below the positioning of said holes 33, determining a thickening of the tubular wall, or a narrowing 35 of the internal diameter of the screw in proximity of the shank 31.

Tool 50 comprises a hollow stem 51, the lower end of which has externally a shape corresponding to the internal shape of the cup screw 30, i.e. with a lower section 52 having the same diameter and the same height as the internal narrowing 35 of the screw, and a conical connection 53 that matches the flair 34, above which diametrically opposed holes 54 are provided, designed to be perfectly flush with the above-mentioned holes 33 of screw 30, when tool 50 is completely inserted in the screw, i.e. when its end abuts on the base 36 of the internal housing of the screw.

In said holes 54 of the hollow stem 51 are housed respective balls 55 able to protrude partially therefrom through the action of a pin 60 housing in the hollow stem 51.

Holes 54 have a slight conicity, which narrows in the outermost area of the hollow stem 51, so as to allow the free movement of balls 55 without however allowing them to protrude completely from holes 54 of stem 51.

Pin 60 is constantly pushed upwards, i.e. into a recessed position in the hollow stem 51 by a spring 61 acting between an inner shoulder 57 of the hollow stem and an abutment collar 62 formed around pin 60, so that the lower end 63 of the pin is normally placed at the same level as the balls 55, holding them in the respective holes 54 of the stem 51.

Immediately above said end 63 of the pin 60 a narrowing of diameter 64 of the pin is provided, determining a circumferential cavity 65 into which the balls 55 can be made to partially recess, without protruding from the external profile of the stem 51.

The pin 60 is locked inside the hollow stem 51 by means of a screw cap 70 which abuts against said collar 62 and at the same time fixes a lever 71 to the stem 51 for actuation of the same.

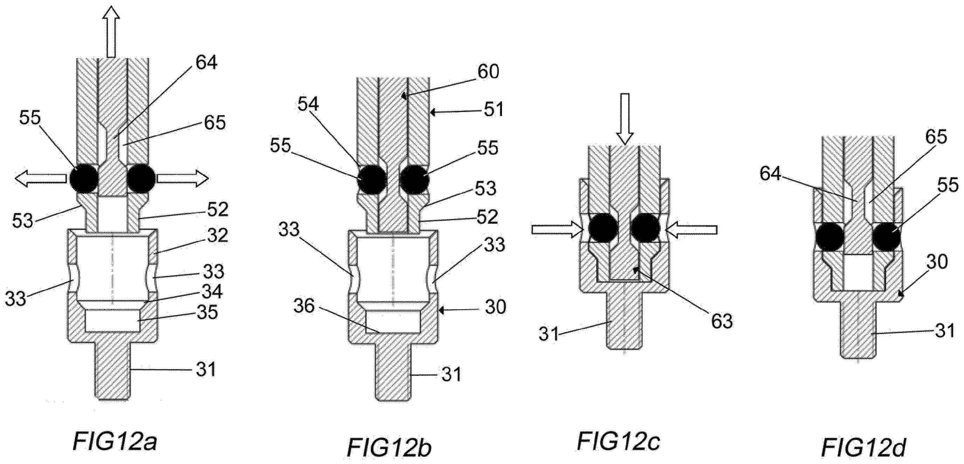

In order to perform the coupling of the cup screw 30 with the tool 50, it is necessary to press the head 66 of the pin 60 protruding above beyond the hollow stem 51, so that the balls 55 go into the cavity 64 of the pin, as shown in Figure 12b, and push the tool 50 until its lower end abuts on the base 36 of the cup screw 30, so that the holes 54 of the hollow stem 50 are placed at the same level as the holes 33 formed in the tubular section 32 of the cup screw 30.

The head 66 of the pin 60 is then released and the tool 50 is rotated until the holes of the hollow stem are placed in perfect alignment with the holes of the screw, in which the balls 55 are partially housed, as shown in Figure 12d, causing the tool to be coupled to the screw, coupling which is perceived by a metallic noise and by the lifting of the head 66 of the pin 60 caused by the action of the spring 61.

At this point it is possible to unscrew screw 30 by turning tool 50 anticlockwise, for example, by means of the actuation lever 71.

Once screw 30 has been removed, it is possible to dismantle the butterfly manoeuvring member 20 by which with the marks 13 remain visible on the top of pin 11, which indicate the position of the ball shutter inside the valve body: open in Figure 6 and closed in Figure 7.

The manoeuvring member 20 can then be reassembled on pin 11 in one of the three setting configurations indicated above.

The release of tool 50 following the re-screwing of the screw is done by performing the operations described with reference to Figures 12a to 12d in reverse.

In what precedes there was mention of a butterfly manoeuvring member 20, but it is clear that the manoeuvring member can be of the lever type.

Conveniently, the valve according to the invention, or most of its components are made in plastic material, it being understood that they can also be made in a metallic material or in mixed plastic and metal material.

From what has been disclosed the advantages of the proposed solution with respect to the prior art are clear, due to the special shape of the cup screw 30 and of the dedicated tool 50.

In fact, once the tool 50 has been coupled to the cup screw 30, it is sufficient to turn the tool by means of the manoeuvring lever 71 to tighten or unscrew the screw, without the need to have to exert an axial thrust on the tool.

It is also extremely difficult, not to say impossible, to actuate the screw with a commercially available tool, or in any case different from the one designed, in that the tip of the tool must be shaped in a perfectly complementary manner to the inner part of the cup screw 30, and the end section 52 of the hollow stem 51 must have the same height as the narrowing 35 of the cup screw, so that the holes 55 in the hollow stem 51 are placed at the same level as the holes 33 of the cup screw when the tool is inserted fully into it.

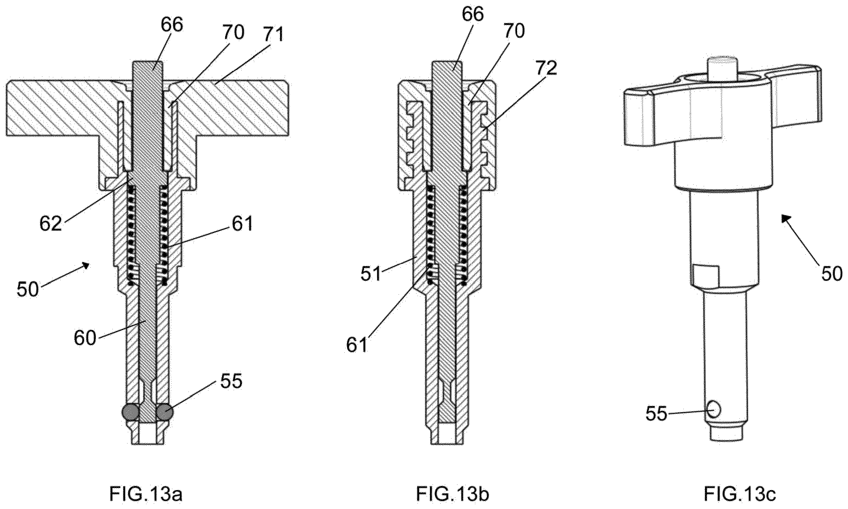

Referring now to Figures 13, 13a, 13b, the variant embodiment of the screw driving tool is briefly described, using the same reference numerals previously introduced to denote identical or similar parts.

Tool 50 is wholly similar structurally to the one previously illustrated, except for the way pin 60 is locked in the hollow stem 51.

In this case, in fact, the cap 70, which abuts against the collar 62 of the pin 60, is incorporated, after injection moulding, in the manoeuvring lever 71, creating a single and inseparable plastic component.

Recesses 72, provided on opposite sides of the hollow stem 51, act as an undercut, blocking axially the manoeuvring lever 71 and not allowing pin 60 to escape from the hollow stem 51.

The tool thus configured has the feature of not being able to be disassembled, except by breaking it.

Naturally the invention is not limited to the particular embodiment described previously and illustrated in the accompanying drawings, but numerous detailed changes may be made thereto, within the reach of the person skilled in the art, without thereby departing from the scope of the invention itself, as defined in the appended claims.

## Claims

1. Assembly comprising a valve (1) for fluids and a dedicated tool (50), said valve comprising a body (10) housing a rotatable shutter, a control rod (11) for said shutter projecting from the body (10) and operable by means of a manoeuvring member (20) which can be attached to said rod (11) in several different angular positions by means of an attachment screw (30), said screw (30) being shaped so as to be able to be screwed/unscrewed with said dedicated tool (50) so as to prevent tampering of the valve,
**characterised in that** the tool (50) comprises a hollow stem (51), a pin (60), a spring (61) and a pair of balls (55), and **in that** said screw (30) has a threaded shank (31) which screws into a threaded hole (12) at the top of said rod (11), and an overlying tubular section (32) in which two diametrically opposed holes (33) are provided, designed to partially house the pair of balls (55) during the coupling of the tool (50) to the screw (30),
said balls (55) being housed in slightly conical opposite holes (54) of the hollow stem (51) of the tool (50) in which the pin (60) is inserted, the pin (60) having an end section (63) constantly engaged with said balls (55) under the action of the spring (61) acting between an inner shoulder (57) of the hollow stem (51) and a collar (62) of the pin, adjacent to said end section (63) the pin (60) having a narrowing in diameter (64) determining an annular cavity (65), designed to house partially said balls (55) without them projecting from the external profile of said hollow stem (51).

2. Assembly according to claim 1, wherein said pin (60) is mounted axially sliding in said hollow stem (51) and is locked by means of a screw cap (70) which abuts against said collar (62) of the pin, said screw cap (70) also fixing a manoeuvring lever (71) of the tool (50).

3. Assembly according to claim 1, wherein said pin (60) is mounted axially sliding in said hollow stem (51), and is locked by means of a screw cap (70) which abuts against said collar (62) of the pin, said screw cap (70) forming a single body with a manoeuvring lever (71) of the tool (50).

4. Assembly according to any one of claims 1 to 3, wherein said tubular section (32) of the screw (30) has, at a level immediately below said holes (33), a flare (34) determining a narrowing of diameter (35) or thickening of the wall of said tubular section (32), and said hollow stem (51) has an end section (52) having the same height as said narrowing (35) of the screw (30) and a conical connection (53) having the same conicity as said flare (34), said holes (54) being provided at a level immediately above said conical connection (53), designed to be placed at the same level as the holes (33) of the screw (30) when the tool (50) is inserted fully into the screw (30).

5. Assembly according to any one of the preceding claims, wherein said manoeuvring member (20) is butterfly-shaped and has symbols to be arranged at references (15) on the valve body for positioning of the valve in three different setting conditions.

6. Assembly according to any one of the preceding claims, wherein reference notches (13) are provided at the top of said pin (11) which, if oriented parallel to the flow of the fluid, indicate an open valve, whereas if oriented perpendicularly to the flow indicate closed valve.

7. Assembly according to any one of the preceding claims, wherein said body (10) is a single piece of plastic material.

8. Assembly according to any one of the preceding claims, also comprising a pressure cap (40) with holes (41) for a tamper-proof guarantee seal.

## Patentansprüche

1. Anordnung, umfassend ein Ventil (1) für Fluida und ein dediziertes Werkzeug (50), wobei das Ventil einen Körper (10) umfasst, der eine drehbare Klappe aufnimmt, wobei eine Steuerstange (11) für die Klappe aus dem Körper (10) herausragt und durch ein Stellglied (20) betätigbar ist, das an der Stange (11) in verschiedenen Winkelpositionen durch eine Befestigungsschraube (30) befestigt werden kann, wobei die Schraube (30) so geformt ist, dass sie mit dem dedizierten Werkzeug (50) festgezogen/gelöst werden kann, um Manipulation des Ventils zu verhindern;
**dadurch gekennzeichnet, dass** das Werkzeug (50) einen hohlen Schaft (51), einen Stift (60), eine Feder (61) und ein Paar Kugeln (55) umfasst, und dass die Schraube (30) einen Gewindeschaft (31) aufweist, der in ein Gewindeloch (12) an der Oberseite der Stange (11) geschraubt ist, und einen darüberliegenden rohrförmigen Abschnitt (32), in dem zwei diametral gegenüberliegende Löcher (33) bereitgestellt sind, die dazu ausgebildet sind, das Paar Kugeln (55) während der Kopplung des Werkzeugs (50) an die Schraube (30) teilweise aufzunehmen,
wobei die Kugeln (55) in leicht konischen gegenüberliegenden Löchern (54) des hohlen Schafts (51) des Werkzeugs (50) aufgenommen sind, in die der Stift (60) eingesetzt ist, wobei der Stift (60) einen Endabschnitt (63) aufweist, der konstant mit den Kugeln (55) unter der Wirkung der Feder (61) in Eingriff steht, die zwischen einer Innenschulter (57) des hohlen Schafts (51) und einem Kranz (62) des Stifts, neben dem Endabschnitt (63) des Stifts (60) mit einer Verjüngung im Durchmesser (64), wirkt, die einen ringförmigen Hohlraum (65) bestimmt, der gestaltet ist, die Kugeln (55) teilweise aufzunehmen, ohne dass sie von dem Außenprofil des hohlen Schafts (51) vorragen.

2. Anordnung nach Anspruch 1, wobei der Stift (60) axial in dem hohlen Schaft (51) gleitend montiert ist und durch eine Schraubenkappe (70) verriegelt ist, die gegen den Kranz (62) des Stifts liegt, wobei die Schraubenkappe (70) auch einen Stellhebel (71) des Werkzeugs (50) fixiert.

3. Anordnung nach Anspruch 1, wobei der Stift (60) axial in dem hohlen Schaft (51) gleitend montiert ist und durch eine Schraubenkappe (70) verriegelt ist, die gegen den Kranz (62) des Stifts liegt, wobei die Schraubenkappe (70) einen einzigen Körper mit einem Stellhebel (71) des Werkzeugs (50) bildet.

4. Anordnung nach einem der Ansprüche 1 bis 3, wobei der rohrförmige Abschnitt (32) der Schraube (30) auf einer Ebene unmittelbar unter den Löchern (33) eine Aufweitung (34) aufweist, die eine Verjüngung von Durchmesser (35) oder Verdickung der Wand des rohrförmigen Abschnitts (32) bestimmt, und der hohle Schaft (51) einen Endabschnitt (52) mit derselben Höhe wie die Verjüngung (35) der Schraube (30) und eine konische Verbindung (53) mit derselben Konizität wie die Aufweitung (34) aufweist, wobei die Löcher (54) auf einer Ebene unmittelbar über der konischen Verbindung (53) bereitgestellt sind, gestaltet, auf derselben Ebene wie die Löcher (33) der Schraube (30) angeordnet zu sein, wenn das Werkzeug (50) vollständig in die Schraube (30) eingesetzt ist.

5. Anordnung nach einem der vorstehenden Ansprüche, wobei das Stellglied (20) schmetterlingsförmig ist und Symbole aufweist, um bei Bezugspunkten (15) an dem Ventilkörper zur Positionierung des Ventils in drei verschiedenen Einstellungszuständen angeordnet zu werden.

6. Anordnung nach einem der vorstehenden Ansprüche, wobei Bezugskerben (13) an der Oberseite des Stifts (11) bereitgestellt sind, die, wenn sie parallel zu dem Strom des Fluids ausgerichtet sind, ein offenes Ventil anzeigen, während wenn sie senkrecht zu dem Strom angeordnet sind, ein geschlossenes Ventil anzeigen.

7. Anordnung nach einem der vorstehenden Ansprüche, wobei der Körper (10) ein einzelnes Stück aus Kunststoffmaterial ist.

8. Anordnung nach einem der vorstehenden Ansprüche, ebenso umfassend eine Druckkappe (40) mit Löchern (41) für eine manipulationssichere Dichtung.

## Revendications

1. Ensemble comprenant une soupape (1) pour des fluides et un outil dédié (50), ladite soupape comprenant un corps (10) abritant un volet rotatif, une barre de commande (11) pour le dit volet saillant du corps (10) et étant actionnable au moyen d'un élément de manœuvre (20) qui peut être fixé à ladite barre (11) à plusieurs positions angulaires différentes au moyen d'une vis de fixation (30), ladite vis (30) étant conformée pour être apte à être vissée/dévissée avec ledit outil dédié (50) de manière à éviter toute fraude sur la soupape,
**caractérisé en ce que** l'outil (50) comprend une tige creuse (51), une broche (60), un ressort (61) et une paire de billes (55), et **en ce que** ladite vis (30) comporte une queue filetée (31) qui se visse dans un trou fileté (12) au sommet de ladite barre (11), et une section tubulaire superposée (32) dans laquelle deux trous diamétralement opposés (33) sont pratiqués et qui est conçue pour abriter partiellement la paire de billes (55) pendant le couplage de l'outil (50) à la vis (30),
lesdites billes (55) étant logées dans des trous opposés légèrement coniques (54) de la tige creuse (51) de l'outil (50) dans laquelle la broche (60) est insérée, la broche (60) ayant une section terminale (63) constamment engagée dans lesdites billes (55) sous l'action du ressort (61) agissant entre un épaulement intérieur (57) de la tige creuse (51) et une collerette (62) de la broche adjacente à ladite section terminale (63), la broche (60) comportant un rétrécissement de diamètre (64) déterminant une cavité annulaire (65) conçue pour loger partiellement lesdites billes (55) sans qu'elles soient du tuyau gentil pour en saillie sur le profil extérieur de ladite tige creuse (51).

2. Ensemble selon la revendication 1, dans lequel ladite broche (60) est montée axialement de manière à coulisser dans ladite tige creuse (51) et est verrouillée au moyen d'un bouchon à vis (70) qui bute contre ladite collerette (62) de la broche, ledit bouchon à vis (70) fixant également un levier de manœuvre (71) de l'outil (50).

3. Ensemble selon la revendication 1, dans lequel ladite broche (60) est montée axialement de manière à coulisser dans ladite tige creuse (51) et est verrouillée au moyen d'un bouchon à vis (70) qui bute contre ladite collerette (62) de la broche, ledit bouchon à vis (70) formant un seul corps avec un levier de manœuvre (71) de l'outil (50).

4. Ensemble selon l'une quelconque des revendications 1 à 3, dans lequel ladite section tubulaire (32) de la vis (30) comporte, à un niveau situé directement en dessous desdits trous (33), un évasement (34) déterminant un rétrécissement de diamètre (35) ou un épaississement de la paroi de ladite section tubulaire (32), et ladite tige creuse (51) a une section terminale (52) ayant la même hauteur que ledit rétrécissement (35) de la vis (30) et une connexion conique (53) ayant la même conicité que ledit évasement (34), lesdits trous (54) étant pratiqués à un niveau directement au-dessus de ladite connexion conique (53) conçue pour être placée au même niveau que les trous (33) de la vis (30) lorsque l'outil (50) est complètement inséré dans la vis (30).

5. Ensemble selon l'une quelconque des revendications précédentes, dans lequel ledit élément de manœuvre (20) est en forme de papillon et comporte des symboles à disposer au niveau de références (15) sur le corps de soupape pour le positionnement de la soupape dans trois positions de réglage différentes.

6. Ensemble selon l'une quelconque des revendications précédentes, dans lequel des encoches de référence (13) sont pratiqués au sommet de ladite broche (11), lesquelles encoches, si elles sont orientées parallèlement au flux de fluide, indiquent une soupape ouverte, tandis que, si elles sont orientées perpendiculairement au flux, elles indiquent une soupape fermée.

7. Ensemble selon l'une quelconque des revendications précédentes, dans lequel ledit corps (10) est une seule pièce de matière plastique.

8. Ensemble selon l'une quelconque des revendications précédentes, comprenant également un capuchon de pression (40) doté de trous (41) pour une étanchéité garantie anti-fraude.
